# EUROPEAN PATENT APPLICATION

(11) **EP 4 624 258 A1**
(43) Date of publication of application: **01.10.2025**
(21) Application number: 25164717.8
(22) Date of filing: 19.03.2025
(51) Int. Cl.: B60R 1/27

(54) **DRIVING ASSISTANCE DEVICE**

(30) Priority: 29.03.2024 JP 2024055964
(71) Applicant: Aisin Corporation, Kariya, Aichi 448-8650 (JP)
(72) Inventor: WATANABE, Kazuya, Kariya, Aichi, 448-8650 (JP)
(74) Representative: TBK

(57) **Abstract**

A driving assistance device (1) includes: an image storage unit (31) configured to cumulatively store captured images, each obtained by capturing an image of a surrounding environment by an imaging device (6, 7, 8A, 8B) provided in a vehicle (2), in association with vehicle information when capturing the respective captured images; an image synthesizing unit (31) configured to synthesize the cumulatively stored captured images based on the vehicle information to generate a route surrounding image (44) indicating a surrounding environment along a route on which the vehicle travels; and an image display unit (4) configured to display the route surrounding image along a route on which the vehicle is currently traveling. The imaging device is provided to capture an image of a region including a side region located laterally with respect to the vehicle. The image storage unit extracts and stores only a part, which includes the side region, in the captured image captured by the imaging device.

## Description

### TECHNICAL FIELD

This disclosure relates to a driving assistance device that assists driving of a vehicle.

### BACKGROUND DISCUSSION

In the related art, various methods are used as an information providing method for providing an occupant of a vehicle with various types of information for assisting traveling of the vehicle, such as route guidance and warning of obstacles. Examples thereof include a display by a liquid crystal display provided in the vehicle and a sound output from a speaker. Here, there are areas that are blind spots around the vehicle that are difficult to see from a position of a driver, and in order to allow the driver to understand a situation in such blind spots, especially when performing special operations such as a parking operation or a garage-leaving operation, images of the surroundings captured by cameras provided in the vehicle are displayed on the liquid crystal display.

For example, JP 2012-178639A discloses a technique in which, when parking assistance for parking a vehicle in a parking space is performed, among captured images obtained by capturing images of a surrounding environment by a plurality of cameras provided in an outer wall of the vehicle, captured images that are captured by cameras corresponding to a traveling direction of the vehicle are displayed on a liquid crystal display. Here, the camera provided in the vehicle uses a wide-angle lens to eliminate the blind spots and capture images over a wider area, and the captured image is distorted due to characteristics of the lens. Displaying the captured image directly gives a user a sense of discomfort, so distortion correction is performed to reduce the distortion of the image before displaying the image.

Here, when the surrounding environment of the vehicle is displayed to the user, an image captured by the camera is not displayed directly as in JP 2012-178639A (paragraphs 0028 to 0040, Fig. 6) (Reference 1), but an image obtained by synthesizing a plurality of images and subjected to a viewpoint conversion is displayed to further improve visibility. As a result, for example, it is possible to display an overhead image or a bird's-eye view image not from a viewpoint of the camera but from any virtual viewpoint in the sky. However, such viewpoint conversion is performed even for a captured image including a three-dimensional object by projecting and pasting the three-dimensional object onto a flat projection surface (ground surface) without considering the three-dimensional object as a three-dimensional target, and therefore a location higher than the ground surface is projected farther away than the location actually is, and the three-dimensional object in the captured image is displayed distorted and stretched compared to an original shape thereof. As a result, the three-dimensional object may be displayed stretched compared to the original shape or displayed largely distorted. In the technique in Reference 1, it is possible to correct the distortion of the captured image caused by the lens, but it is not possible to eliminate the distortion or the elongation in the viewpoint conversion as described above.

A need thus exists for a driving assistance device in which only a part of a captured image captured by an imaging device in a side region of a vehicle is extracted and is cumulatively stored, and a route surrounding image generated by synthesizing the cumulatively stored images is displayed, and therefore even when an overhead image or a bird's-eye view image from any virtual viewpoint is displayed, it is possible to display a three-dimensional object without being distorted or stretched relative to an original shape thereof.

### SUMMARY

A driving assistance device according to this disclosure includes: an image storage unit configured to cumulatively store captured images, each obtained by capturing an image of a surrounding environment by an imaging device provided in a vehicle, in association with vehicle information when capturing the respective captured images; an image synthesizing unit configured to synthesize the cumulatively stored captured images based on the vehicle information to generate a route surrounding image indicating a surrounding environment along a route on which the vehicle travels; and an image display unit configured to display the route surrounding image along a route on which the vehicle is currently traveling, in which the imaging device is provided to capture an image of a region including a side region located laterally with respect to the vehicle, and the image storage unit extracts and stores only a part, which includes the side region, in the captured image captured by the imaging device.

The "captured image obtained by capturing an image of the surrounding environment" may be an image captured by an imaging device such as a camera or an image obtained by processing the captured image. For example, an image obtained by synthesizing images captured by a plurality of cameras or an image obtained by viewpoint conversion may be used.

According to the driving assistance device of this disclosure having the above configuration, only a part of the captured image captured by the imaging device in a side region located laterally with respect to the vehicle is extracted and is cumulatively stored, and the route surrounding image generated by synthesizing the cumulatively stored images is displayed, and therefore even when an overhead image or a bird's-eye view image from any virtual viewpoint is displayed, it is possible to display a three-dimensional object without being distorted or stretched relative to an original shape thereof.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram showing a configuration of a driving assistance device according to the present embodiment;
Fig. 3 is a flowchart of a route surrounding image generation processing program according to the present embodiment;
Fig. 4 is a diagram showing ranges of captured images to be cumulatively stored;
Fig. 5 is a diagram showing projection surfaces of the captured images to be cumulatively stored;
Fig. 6 is a diagram showing a route surrounding image generated by combining a part of the cumulatively stored captured images.
Fig. 7 is a diagram showing an example of the route surrounding image;
Fig. 8 is a flowchart of a parking assistance processing program according to the present embodiment;
Fig. 9 is a diagram showing the route surrounding image displayed on a liquid crystal display;
Fig. 10 is a diagram showing a modification; and
Fig. 11 is a diagram showing a modification.

### DETAILED DESCRIPTION

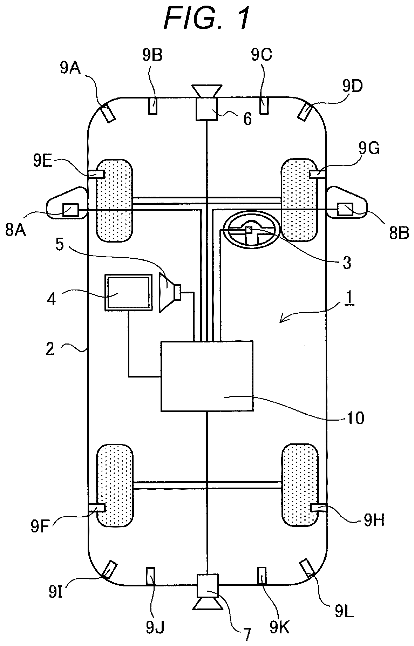

Hereinafter, a driving assistance device according to an embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

Autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects the autonomous driving assistance (for example, turning on an autonomous driving start button) and it is determined that the traveling by the autonomous driving assistance is possible. Meanwhile, the vehicle 2 may be a vehicle that can only perform assisted traveling by autonomous driving assistance. Alternatively, the vehicle 2 may perform the assisted traveling by the autonomous driving assistance only for traveling (that is, parking assistance) to a parking space when the vehicle is parked.

In vehicle control in autonomous driving assistance according to the present embodiment, for example, a current position of the vehicle, a lane in which the vehicle travels, and positions of surrounding obstacles are detected at any time, and the vehicle control of a steering, a drive source, and a brake is automatically performed such that the vehicle travels along a generated travel trajectory at a speed according to a speed plan generated in the same manner. In particular, when parking assistance is performed, the vehicle control is automatically performed in which the parking space, which is a target into which the vehicle is to be parked, and a surrounding situation are confirmed using detection results of a sensor or a camera, a parking trajectory to the parking space is calculated, the vehicle enters the parking space along the calculated parking trajectory, and the parking is completed. However, only a steering operation may be automatically performed, and the drive source and the brake may be controlled based on a manual operation. Alternatively, only guidance on the parking trajectory into the parking space or guidance on a vehicle operation may be performed, and a parking operation into the parking space may be manually performed by the user. Further, in the above autonomous driving assistance, a route surrounding image is displayed on an in-vehicle display. The route surrounding image is an image of an actual scene along a route on which the vehicle currently travels, which is generated from a scene (actual scene) around the vehicle captured in the past by a camera provided in the vehicle.

As shown in Fig. 1, the vehicle 2 includes an operation unit 3 that receives an operation from an occupant, a liquid crystal display 4 that displays the route surrounding image to be described later and other information related to the driving assistance to the occupant, a speaker 5 that outputs audio guidance related to the driving assistance, a front camera 6, a rear camera 7, and side cameras 8A and 8B for capturing images of surroundings of the vehicle, ultrasonic sensors 9A to 9L that detect obstacles in the surroundings of the vehicle, and a driving assistance electronic control unit (ECU) 10 that performs various types of arithmetic processing based on received information. The above driving assistance device 1 includes the driving assistance ECU 10 and other components.

Hereinafter, the components included in the vehicle 2 will be described. First, the operation unit 3 is disposed, for example, on a front surface of a steering wheel and includes operation buttons that are operated when the autonomous driving assistance is started. By operating the operation unit 3, the user can switch between the manual driving traveling in which the vehicle travels based on the driving operation of the user and assisted traveling by autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is provided on an instrument panel of the vehicle 2 and displays the route surrounding image which is an image of an actual scene along a route on which the vehicle is currently traveling. Here, the route surrounding image is generated by performing synthesis processing on a part of captured images captured in the past by cameras including the front camera 6, the rear camera 7, and the side cameras 8A and 8B, and is an actual scene image (a so-called street view) indicating a surrounding environment along a route on which the vehicle travels. For example, when the vehicle travels on the same route as the route on which the vehicle has traveled in the past, it is possible to display the route surrounding image along the route which includes a route portion on which the vehicle is going to travel in addition to a route portion on which the vehicle has already traveled. In contrast, when the vehicle travels on a route on which the vehicle has not traveled in the past, it is possible to display a route surrounding image along the route only in a direction opposite to the traveling direction (for example, backward when the vehicle is moving forward, and forward when the vehicle is moving backward) with respect to the current position of the vehicle, that is, only for the route portion on which the vehicle has already traveled. When there is a warning object such as a pedestrian around the vehicle 2, a warning image indicating the presence of the warning object may also be displayed at a position of the warning object in the route surrounding image. When the parking assistance is performed, the parking space or the parking trajectory to the parking space serving as a parking candidate may be displayed in the route surrounding image displayed on the liquid crystal display 4. The liquid crystal display 4 may also be used in a navigation device.

The speaker 5 is provided on the instrument panel of the vehicle 2 and outputs a guidance voice or a warning sound related to the driving assistance. The speaker 5 may also be used in a navigation device.

The front camera 6 is, for example, an imaging device including a camera using a solid-state imaging element such as a CCD and is provided, for example, above a front bumper of the vehicle 2 or on a back side of a rear-view mirror with an optical axis direction thereof being directed to the front in the traveling direction of the vehicle.

The rear camera 7 is also an imaging device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also imaging devices each including a camera using a solid-state imaging element such as a CCD and are attached to, for example, left and right side mirrors of the vehicle 2 with optical axis directions thereof being directed to lateral sides of the vehicle. In particular, the side cameras 8A and 8B each have an imaging region including a region including a side region located laterally with respect to the vehicle 2.

The driving assistance ECU 10 cumulatively stores, among the captured images captured by the cameras including the above front camera 6, rear camera 7, and side cameras 8A and 8B, in particular, a part of the captured images captured by the side cameras 8A and 8B during traveling together with vehicle information (vehicle speed, host vehicle position coordinates, and the like) when capturing the image, and synthesizes the cumulatively stored images to generate the route surrounding image indicating the surrounding environment along the route on which the vehicle has traveled. During the execution of the autonomous driving assistance, by performing image recognition processing on the captured image, a partition line, a parking frame line, and an obstacle (another vehicle, a pedestrian, a bicycle, a wall, a guard rail, and other structures) around the vehicle are detected, and the autonomous driving assistance is executed based on a detection result thereof. In particular, when parking assistance is performed, the above detection result of the obstacle by the camera is used to specify the parking space and confirm the surrounding situation.

The ultrasonic sensors 9A to 9L are disposed at predetermined intervals on the front, rear, and sides of the vehicle, respectively, transmit ultrasonic waves as probing waves to the surroundings of the vehicle 2, and receive reflected waves which are the transmitted probing waves reflected by objects around the vehicle, thereby detecting the objects that reflect the probing waves. Specifically, the ultrasonic sensors 9A to 9L are a type of distance measurement sensor that can detect a distance (distance measurement value) to the object that reflects the probing wave by measuring a time from the transmission to the reception. The ultrasonic sensors 9A to 9L can generate an output signal (including the distance to the detected object) corresponding to a reception result of the reception wave and output the output signal to a control unit. Examples of an object serving as a target to be detected by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set as appropriate. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probing wave is forward in the traveling direction of the vehicle. The ultrasonic sensors 9E and 9F are provided on a left side surface of the vehicle 2 being directed to a left direction such that the transmission direction of the probing wave is leftward in the traveling direction of the vehicle. The ultrasonic sensors 9G and 9H are provided on a right side surface of the vehicle 2 being directed to a right direction such that the transmission direction of the probing wave is rightward in the traveling direction of the vehicle. The ultrasonic sensors 9I to 9L are provided on a rear surface of the vehicle 2 being directed in a direction opposite to the traveling direction such that the transmission direction of the probing wave is toward the rear of the vehicle. The ultrasonic sensors 9A to 9L have substantially the same height from the ground surface.

In the present embodiment, among the ultrasonic sensors 9A to 9L, in particular, the ultrasonic sensors 9A to 9D on a front surface of the vehicle 2 and the ultrasonic sensors 9I to 9L on a rear surface of the vehicle 2 are provided at positions at which reflected waves can be received as indirect waves between adjacent sensors. Therefore, it is possible to specify not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can be specified by triangulation using a measured distance of a previous position, a measured distance of a current position, and a movement distance therebetween as the vehicle moves.

The driving assistance ECU 10 is an electronic control unit that performs various types of processing related to autonomous driving assistance. For example, the current position of the vehicle, the lane in which the vehicle travels, and the positions of surrounding obstacles are detected at any time, and the vehicle control of steering, a drive source, and a brake is performed such that the vehicle travels along a generated travel trajectory at a speed according to a speed plan generated in the same manner. In particular, when parking assistance is performed, the vehicle control is performed in which the parking space, which is a target into which the vehicle is to be parked, and a surrounding situation are confirmed using detection results of the front camera 6, the rear camera 7, the side cameras 8A and 8B, and the ultrasonic sensors 9A to 9L, a parking trajectory to the parking space is calculated, the vehicle enters the parking space along the calculated parking trajectory, and the parking is completed. A part of the captured images captured by the side cameras 8A and 8B during traveling are cumulatively stored together with the vehicle information (host vehicle position coordinates, orientation, and traveling direction) when capturing the image, the cumulatively stored images are synthesized to generate the route surrounding image indicating the surrounding environment along the route on which the vehicle has traveled, and the generated route surrounding image is displayed in the autonomous driving assistance. The driving assistance ECU 10 is connected to the operation unit 3, the liquid crystal display 4, the speaker 5, the front camera 6, the rear camera 7, the side cameras 8A and 8B, and the ultrasonic sensors 9A to 9L via an in-vehicle network such as a CAN. The driving assistance ECU 10 is also connected to various sensors such as a vehicle speed sensor, a wheel speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components shown in Fig. 1, the vehicle 2 includes basic components as the vehicle 2. However, only a configuration related to control of the autonomous driving assistance and control related to the configuration will be described.

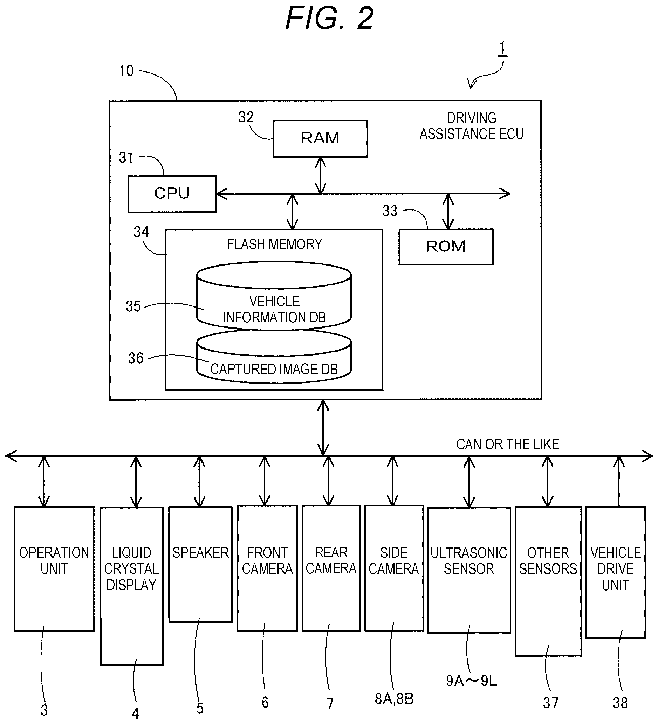

Next, the driving assistance ECU 10 of the driving assistance device 1 included in the vehicle 2 will especially be described in detail. Fig. 2 is a block diagram showing a configuration of the driving assistance device 1 according to the present embodiment.

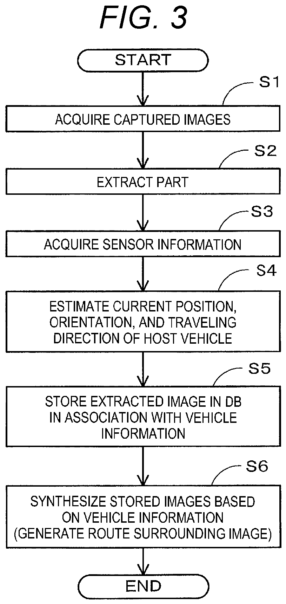

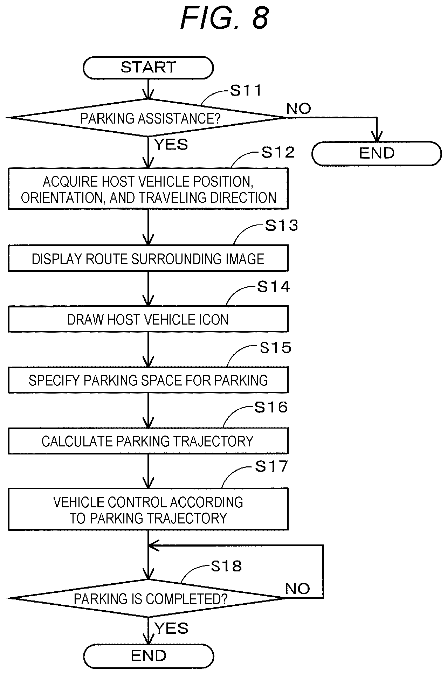

As shown in Fig. 2, the driving assistance electronic control unit (ECU) 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores travel trajectory data when the travel trajectory is calculated, a ROM 33 that stores a control program, and a route surrounding image generation processing program (see Fig. 3) and a parking assistance processing program (see Fig. 8), which will be described later, and a flash memory 34 that stores a program read from the ROM 33. The driving assistance ECU 10 includes various units as a processing algorithm. For example, an image storage unit cumulatively stores captured images obtained by capturing images of the surrounding environment by the camera provided in the vehicle in association with the vehicle information when capturing the captured image. An image synthesizing unit synthesizes the cumulatively stored captured images based on the vehicle information to generate the route surrounding image indicating the surrounding environment along a route on which the vehicle has traveled. An image display unit displays the route surrounding image along a route on which the vehicle is currently traveling.

The driving assistance ECU 10 is also connected to various sensors 37 for detecting behaviors of the vehicle, such as a vehicle speed sensor, a wheel speed sensor, an acceleration sensor, a gyro sensor, a steering sensor, and a shift position sensor, and a drive unit 38 of the vehicle, such as a steering wheel, a brake, an accelerator, and a transmission. A current behavior of the vehicle is detected based on detection results of these sensors 37, and the autonomous driving assistance for the vehicle 2 is performed by controlling the drive unit 38. As specific contents of autonomous driving assistance, for example, the current position of the vehicle, the lane in which the vehicle travels, and the positions of surrounding obstacles are detected at any time, and the vehicle control of a steering, a drive source, and a brake is performed such that the vehicle travels along a generated travel trajectory at a speed according to a speed plan generated in the same manner. However, only a steering operation may be automatically performed, and the drive source and the brake may be controlled based on a manual operation.

The flash memory 34 includes a vehicle information DB 35 and a captured image DB 36. The vehicle information DB 35 stores various types of information related to the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. Such pieces of information are input in advance by the occupant or a person on a vehicle manufacturer side.

The captured image DB 36 is a storage unit for accumulating and storing a part of the captured images captured by the side cameras 8A and 8B during traveling together with the vehicle information when capturing the image. The vehicle information includes position coordinates, orientation, and traveling direction (forward and backward) of the vehicle at the time of capturing the captured image stored in the captured image DB 36. The vehicle information is estimated from, for example, a vehicle speed, a wheel speed, a wheel speed pulse integration value, a steering angle, and the like acquired by the various sensors 37.

Next, the route surrounding image generation processing program executed by the driving assistance ECU 10 in the driving assistance device 1 having the above-described configuration will be described with reference to Fig. 3. Fig. 3 is a flowchart of the route surrounding image generation processing program according to the present embodiment. Here, the route surrounding image generation processing program is a program that is executed after an accessory power supply (ACC) of the vehicle 2 is turned on, accumulates and stores a part of the captured images captured by the cameras included in the vehicle 2, and synthesizes the stored captured images to generate the route surrounding image indicating the surrounding environment along a route on which the vehicle has traveled. However, if a target for which the route surrounding image is generated is limited to the parking lot, the route surrounding image generation processing program may be executed when the host vehicle enters the parking lot. Alternatively, if a period during which the route surrounding image is generated is limited to a period during which the vehicle is traveling by the autonomous driving assistance, the route surrounding image generation processing program may be executed when the autonomous driving assistance is started. The programs shown in the flowcharts in Fig. 3 and Fig. 8 are stored in the RAM 32 and the ROM 33 of the driving assistance device 1 and are executed by the CPU 31.

The following processing is performed for each of images captured by the side cameras 8A and 8B. For example, since the side cameras 8A and 8B according to the present embodiment have a frame rate of 30 fps (capturing 30 images per second), the following processing is performed on the most recently captured image every 33 ms. However, an execution interval of the program does not necessarily have to be 33 ms. For example, if processing is performed on 10 images at once, the program may be executed every 330 ms.

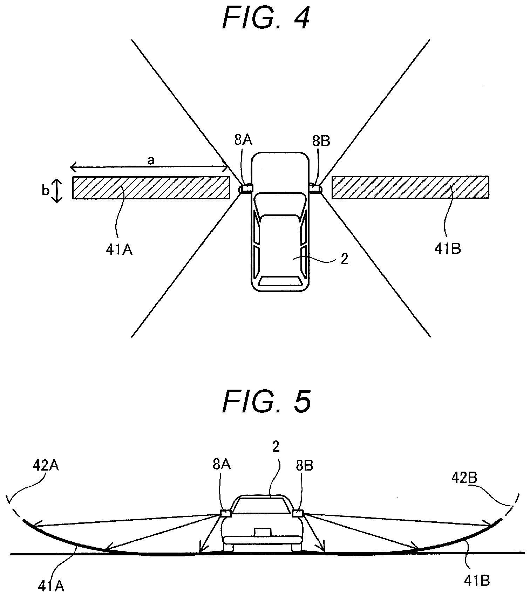

First, in step (hereinafter abbreviated as S) 1, the CPU 31 acquires captured images captured most recently by the side cameras 8A and 8B. As described above, in the present embodiment, the side cameras 8A and 8B are attached to the left and right side mirrors of the vehicle 2 and are provided to be directed to the lateral sides of the vehicle. Therefore, as shown in Fig. 4, captured images obtained by capturing images of the surrounding environment on the lateral sides of the vehicle 2 are acquired.

Subsequently, in S2, the CPU 31 extracts (trims) a part of the captured images of the side cameras 8A and 8B acquired in S1. Here, a range in which the captured image is extracted is a part of the side region located laterally with respect to the vehicle. For example, when extracting the captured images captured by the side cameras 8A and 8B, the range are extraction ranges 41A and 41B shown in Fig. 4. Since the extraction range 41A and the extraction range 41B are bilaterally symmetrical and have the same shape, to describe the extraction range 41A as an example, the extraction range 41A is an elongated rectangular region perpendicular to an axle extending in a front-rear direction of the vehicle within an imaging range of the side camera 8A. In Fig. 4, the side camera 8A is located perpendicular to a side surface of the vehicle and is not limited thereto. More specifically, a range of the rectangular shape in the left-right direction starts as close as possible to the host vehicle, and is a range including at least an aisle through which the host vehicle travels when the host vehicle travels through the aisle in the parking lot and vehicles parked on left and right side. For example, a length a is about 5 m. It is preferable that the extraction range 41A includes as much of the vicinity of the host vehicle as possible, but it is also preferable that the extraction range 41A does not include a shadow of the host vehicle. However, if a is made longer such that more distant regions are included in the extraction range 41A, a region that can be displayed in the route surrounding image to be described later is wider. However, the farther away from the host vehicle, the higher the possibility that the image is stretched or distorted when projected onto a projection surface to be described later. Therefore, it is preferable to make a as short as possible within the range including a road surface on which the host vehicle travels and the vehicles parked on the left and right sides.

Meanwhile, a width of the rectangular shape of the extraction range 41A in the front-rear direction is set to a width at which gaps between the images are not generated when the extracted captured images are connected (S6) along the traveling direction to be described below. For example, assuming imaging in the parking lot, assuming a traveling speed of the vehicle is 20 km/h, a distance by which the vehicle travels during one frame (33 ms) is 0.183 m. Therefore, if b is set to about 0.2 m, no gap is generated between the images. If b is made longer, no gap is generated between the images even when the vehicle travels at a high speed. However, the farther away from the optical axis direction, the higher the possibility that the image is stretched or distorted when projected onto the projection surface to be described later. Therefore, it is preferable to make b as short as possible in a range of not generating gaps between the images.

Values of a and b are merely examples and may be changed depending on the vehicle speed and the type of road on which the vehicle travels. For example, the values of a and b may be made small in a parking lot in which the vehicle is estimated to travel at a low speed, and the values of a and b may be made large in a general road on which the vehicle is estimated to travel at a high speed. In the present embodiment, the extraction range 41A and the extraction range 41B are bilaterally symmetrical and have the same shape, but the extraction range 41A and the extraction range 41B may have different ranges. For example, in countries where traveling is on the left side of the road, it is estimated that vehicles are parked on the shoulder on the left side of the vehicle 2 traveling on the general road. Therefore, the left extraction range 41A may be set wider than the right extraction range 41B to include these parked vehicles in the extraction range.

In addition, when the captured images in the extraction range 41A and the extraction range 41B are extracted in S2, as shown in Fig. 5, curved surfaces that become further away from the ground surface as distances from the vehicle increase are used as projection surfaces 42A and 42B, and images obtained by projecting (converting) the captured images onto the projection surfaces 42A and 42B are extracted from the extraction range 41A and the extraction range 41B. By curving the projection surfaces 42A and 42B in a height direction as shown in Fig. 5, the image extracted in S2 can be an image showing not only the road surface but also the environment in a side direction as viewed from the host vehicle. Curvature angles and heights of the projection surfaces 42A and 42B can be changed as appropriate.

Alternatively, the projection surfaces 42A and 42B may be the ground surface (horizontal plane) instead of curved surfaces. An overhead image may be generated by converting the captured image projected onto the ground surface into an image seen from a virtual viewpoint looking down vertically from above the vehicle 2, and then overhead images corresponding to the extraction range 41A and extraction range 41B shown in Fig. 4 may be extracted. In particular, when the image is trimmed into a rectangular shape to include a direction perpendicular to the axle in the front-rear direction of the vehicle at the installation position of the camera, it is possible to trim the image without deformation or distortion.

Next, in S3, the CPU 31 acquires detection values indicating the behaviors of the vehicle such as the vehicle speed, the wheel speed, the wheel speed pulse integration value, and the steering angle from the various sensors 37 included in the vehicle connected via the CAN.

Subsequently, in S4, the CPU 31 estimates the position coordinates, the orientation, and the traveling direction (forward and backward) of the vehicle at the current time point based on the detection values acquired in S3. Each piece of information estimated in S4 is information obtained by estimating the position coordinates, the orientation, and the traveling direction (forward and backward) of the vehicle as the vehicle information when the captured image extracted in S2 is captured. The position coordinates and the orientation estimated in S4 are relative values with respect to a reference position and a reference orientation. The reference position and the reference orientation are, for example, a position and an orientation of the vehicle 2 when the accumulation storage of the captured images in the current travel is started (for example, when the ACC power supply is turned on, when the vehicle enters the parking lot, when the autonomous driving starts, or the like).

Thereafter, in S5, the CPU 31 cumulatively stores a part of the captured images extracted in S2 in the captured image DB 36 in association with the vehicle information estimated in S4. Specifically, a part of the captured images captured by the side camera 8A and a part of the captured images captured by the side camera 8B are separated and stored in time series (or in a sequence according to the coordinates of the host vehicle at the time of imaging).

Then, in S6, the CPU 31 synthesizes the plurality of captured images stored in the captured image DB 36 in S5 based on the associated vehicle information to generate the route surrounding image along the route on which the vehicle has traveled.

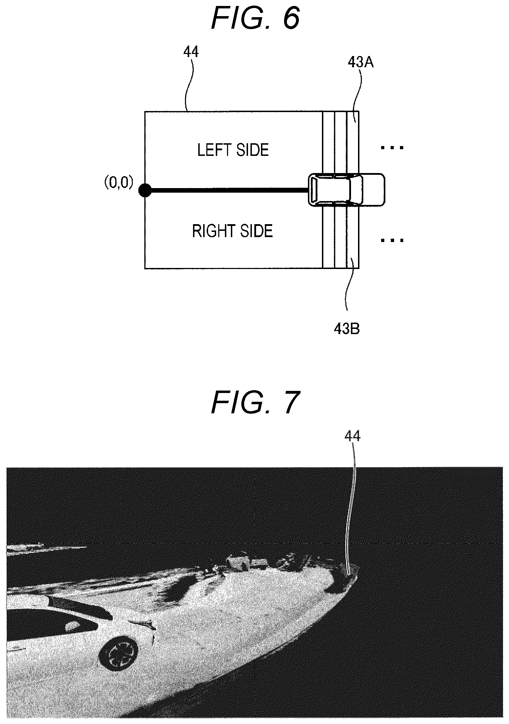

Specifically, as shown in Fig. 6, a part of the captured image captured by the side camera 8A (hereinafter, referred to as a left captured image 43A) extracted in S2 and a part of the captured image captured by the side camera 8B (hereinafter, referred to as a right captured image 43B) similarly extracted in S2 are connected according to the position coordinates, the orientation, and the traveling direction of the host vehicle at the time of imaging to generate a route surrounding image 44. When an overlapping range is generated in the left captured image 43A or the right captured image 43B due to the connection, the overlapping region is overwritten with new images with priority. Fig. 7 is an image diagram of the route surrounding image 44 generated by connecting the left captured image 43A and the right captured image 43B. The generated route surrounding image 44 also includes information about a route on which the vehicle has traveled when the route surrounding image 44 is generated, that is, information for specifying what type of route the vehicle traveled on when the route surrounding image 44 is generated. The route surrounding image 44 generated in S6 is stored in the flash memory 34 together with the information about the route.

A gap equivalent to the width of the host vehicle is generated between the left captured image 43A and the right captured image 43B. Since the road surface is present in the gap, an image of the road surface may be generated and used for interpolation, or a captured image captured by the front camera 6 or the rear camera 7 may be used for interpolation.

In the example shown in Fig. 6, each time the left captured image 43A or the right captured image 43B is newly acquired, a route surrounding image 44 is generated by connecting to the route surrounding image 44 that exists at the time of acquisition. That is, the route surrounding image 44 along the route on which the vehicle is currently traveling is generated in real time in a direction opposite to the traveling direction (for example, backward when the vehicle is moving forward, and forward when the vehicle is moving backward) with respect to the current position of the vehicle, and a timing of generating the route surrounding image 44 may be a time when the traveling is ended. For example, the processing in S1 to S5 may be repeatedly performed during traveling, and the processing in S6 may be performed when parking is completed. In this case, the left captured image 43A and the right captured image 43B acquired during the traveling up to the completion of parking of this time are read from the captured image DB 36 when the parking is completed, and the route surrounding image 44 along the route on which the vehicle has traveled during the traveling up to the completion of parking of this time is collectively generated.

However, in a mode in which the route surrounding image 44 is collectively generated at the time of completion of parking, the route surrounding image 44 along the route on which the vehicle is currently traveling cannot be displayed when the vehicle is traveling on a new route other than the route on which the host vehicle has traveled in the past and for which the route surrounding image 44 has been generated. In contrast, in a mode in which the route surrounding image 44 along the route on which the vehicle is currently traveling is generated in real time in a direction opposite to the traveling direction (for example, backward when the vehicle is moving forward, and forward when the vehicle is moving backward) with respect to the current position of the vehicle, although it is limited to the direction opposite to the traveling direction with respect to the current position of the vehicle, it is possible to display the route surrounding image 44 along the route on which the vehicle is currently traveling even when the vehicle is traveling along a new route. In addition, it is possible to display the route surrounding image 44 that reflects the surrounding situations (for example, positions of other vehicles) in real time.

When the vehicle travels again on the same route as a route for which the route surrounding image 44 is already generated, it is basically not necessary to generate the route surrounding image 44. For example, when it is desired to display the route surrounding image 44 that reflects the above-mentioned surrounding situations in real time during the execution of parking assistance, the route surrounding image 44 may be generated again.

As a problem in the related art, when a captured image captured by a camera is displayed as an overhead image or a bird's-eye view image by changing the viewpoint, the three-dimensional object in the captured image may be displayed distorted or stretched relative to the original shape thereof, whereas in the present embodiment, as shown in Fig. 4, only images in a very narrow range perpendicular to the axle extending in the front-rear direction of the vehicle is extracted, and the captured images which are similarly extracted are connected to generate the route surrounding image 44 shown in Fig. 7. Therefore, even when there is a three-dimensional object in the generated route surrounding image 44, it is possible to prevent distortion or stretching relative to the original shape.

Next, a parking assistance processing program executed by the driving assistance ECU 10 in the driving assistance device 1 having the above-described configuration will be described with reference to Fig. 8. Fig. 8 is a flowchart of the parking assistance processing program according to the present embodiment. Here, the parking assistance processing program is a program that is executed after the accessory power supply (ACC) of the vehicle 2 is turned on and performs parking assistance particularly when the vehicle is parked as one of autonomous driving assistance. The parking assistance processing program shown in Fig. 8 and the route surrounding image generation processing program (Fig. 3) are executed in parallel. That is, the route surrounding image 44 is generated for the route on which the vehicle has traveled while performing parking assistance. However, control may be performed such that when the vehicle travels again on the route for which the route surrounding image 44 has already been generated, the route surrounding image generation processing program is not executed.

First, in S11, the CPU 31 determines whether to start parking assistance. In particular, the contents of the parking assistance according to the present embodiment including automatically moving the vehicle to the parking space for parking the vehicle, and displaying the route surrounding image 44 generated by the route surrounding image generation processing program (Fig. 3).

For example, the parking assistance may be started when the user operates the operation unit 3 to select to start the parking assistance, or the parking assistance may be automatically started when it is detected that the vehicle enters the parking lot, when it is determined that the vehicle arrives at a set destination, or when the vehicle approaches the parking lot.

If it is determined that the parking assistance is started (YES in S11), the processing proceeds to S12. On the other hand, if it is determined that the parking assistance is not started (NO in S11), the parking assistance processing program is ended.

In S12, the CPU 31 acquires the detection values indicating the behaviors of the vehicle such as the vehicle speed, the wheel speed, the wheel speed pulse integration value, and the steering angle from the various sensors 37 included in the vehicle connected via the CAN, and specifies the position coordinates, the orientation, and the traveling direction (forward and backward) of the vehicle at the current time.

Thereafter, in S13, the CPU 31 displays the route surrounding image 44 generated by the route surrounding image generation processing program (Fig. 3) on the liquid crystal display 4 in a mode of matching the current position, the orientation, and the traveling direction of the vehicle. That is, the route surrounding image 44 corresponding to the current position coordinates, the orientation, and the traveling direction of the vehicle is read from the flash memory 34 and displayed on the liquid crystal display 4. A setting of the virtual viewpoint (from which viewpoint and in which direction the route surrounding image 44 is drawn) when drawing the route surrounding image 44 can be set as appropriate. For example, when the host vehicle travels again on a route on which the host vehicle has traveled in the past and for which the route surrounding image 44 has been generated, it is also possible to display the route surrounding image 44 in front of the vehicle. Therefore, it is possible to set the virtual viewpoint in the sky in the direction opposite to the traveling direction (for example, backward when the vehicle is moving forward, and forward when the vehicle is moving backward) with respect to the current position of the vehicle, and display a bird's-eye view image obtained looking diagonally downward from the sky in the traveling direction. Alternatively, it is also possible to display an overhead image looking down vertically from above the current position of the vehicle. In contrast, when the host vehicle travels on a route other than the route on which the host vehicle has traveled in the past and for which the route surrounding image 44 has been generated, it is possible to display only the route surrounding image 44 of the route portion on which the host vehicle has already traveled in the direction opposite to the traveling direction (for example, backward when the vehicle is moving forward, and forward when the vehicle is moving backward) of the vehicle. Therefore, for example, it is possible to set the virtual viewpoint in the sky ahead of the current position of the vehicle in the traveling direction and display a bird's-eye view image looking diagonally downward from the sky in the direction opposite to the traveling direction.

When the host vehicle travels again on the route on which the host vehicle has traveled in the past and for which the route surrounding image 44 has been generated, a route image showing a traveling route on which the host vehicle has traveled in the past may also be drawn on the route surrounding image 44. A specific position and shape of a trajectory of the traveling route on which the host vehicle has traveled in the past in the route surrounding image 44 can be specified based on the vehicle information stored in the captured image DB 36. The vehicle information includes position coordinates, orientation, and traveling direction (forward and backward) of the vehicle when capturing the captured image stored in the captured image DB 36.

Here, as a problem in the related art, when a captured image captured by a camera is displayed as an overhead image or a bird's-eye view image by changing the viewpoint, the three-dimensional object in the captured image may be displayed distorted or stretched relative to the original shape thereof, whereas in the present embodiment, as described above, only images in a very narrow range perpendicular to the axle extending in the front-rear direction of the vehicle are extracted. Therefore, when the virtual viewpoint is converted to any position and the image is displayed, even when there is a three-dimensional object, such as the parked vehicle, in the route surrounding image 44, it is possible to prevent the image from being displayed distorted or stretched relative to the original shape.

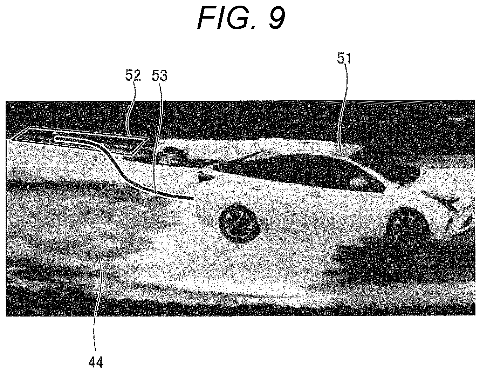

Then, in S14, the CPU 31 superimposes a host vehicle icon image 51 indicating the position and the orientation of the host vehicle in correspondence with the current position and the orientation of the host vehicle on the route surrounding image 44 drawn in S13 and displays the route surrounding image 44 on the liquid crystal display 4. Fig. 9 is a diagram showing the route surrounding image 44 drawn by superimposing the host vehicle icon image 51. The host vehicle icon image 51 is an image that imitates the appearance of the host vehicle. By drawing the host vehicle icon image 51, the user can grasp the environment around the vehicle in association with the current position and the orientation of the host vehicle. Fig. 9 shows an example of the route surrounding image 44 displayed when the vehicle is moving forward, and for example, when the vehicle is moving backward, the route surrounding image 44 in a range ahead of the current position of the vehicle is displayed.

In the route surrounding image 44 displayed on the liquid crystal display 4 in S13, when the current position of the vehicle changes, a display range is sequentially switched and displayed. When the current position and the orientation of the vehicle change, a display position and an orientation of the host vehicle icon image 51, which is displayed on the liquid crystal display 4 in S14, in the route surrounding image 44 change accordingly.

Thereafter, in S15, the CPU 31 specifies a parking space for parking the vehicle. The parking space may be specified by, for example, the user freely designating a desired parking space on the route surrounding image 44 displayed on the liquid crystal display 4, or by the user registering a parking space to park (for example, a home garage) in advance to specify the registered parking space as the parking space for parking the vehicle. Alternatively, the ultrasonic sensors 9A to 9L or the cameras may be used to detect a vacant parking space around the host vehicle in real time, and the parking space detected as vacant may be identified as a parking space for parking the vehicle.

When the ultrasonic sensors 9A to 9L or the cameras are used to detect the vacant parking space, a parking frame 52 may be displayed in the route surrounding image 44 displayed on the liquid crystal display 4 as shown in Fig. 9. Accordingly, it is possible to confirm the status of vacant parking space around the current position of the host vehicle. In particular, even when there is a vacant parking space at a position where the host vehicle has already passed (a position that is a blind spot from the occupant), it is possible to easily confirm the parking space on the route surrounding image 44.

Subsequently, in S16, the CPU 31 calculates a parking trajectory that is a travel trajectory for parking the host vehicle in the parking space specified in S15. For example, to describe the calculation of the parking trajectory when performing parallel parking, there is a combination of a preparatory trajectory along which the host vehicle moves from the current position to a backward start position, a first half trajectory along which the vehicle turns from the backward start position to a steering position, a second half trajectory along which the vehicle turns from the steering position to a target parking position, and a turning trajectory obtained by turning, if necessary, after the vehicle reaches the target parking position (the turning trajectory is not essential). As the vehicle 2 travels along the parking trajectory, the vehicle 2 can enter the target parking position in the parking space and the vehicle 2 can be located at the target parking position in an appropriate vehicle orientation.

When the parking trajectory is calculated, a parking trajectory 53 may be displayed in the route surrounding image 44 displayed on the liquid crystal display 4 as shown in Fig. 9.

Thereafter, in S17, the CPU 31 starts parking assistance according to the parking trajectory calculated in S16. Specifically, the current position of the host vehicle is detected at any time, and vehicle control of the steering, the drive source, and the brake is automatically performed such that the vehicle travels at a designated speed along the generated parking trajectory. A shift position is also automatically switched.

However, in the movement of the vehicle along the parking trajectory, only a steering operation may be automatically performed, and the drive source and the brake may be controlled based on a manual operation. Alternatively, the movement of the vehicle may be performed not by autonomous driving but by manual driving. In this case, as the parking assistance, the parking space and the parking trajectory are displayed on the liquid crystal display 4, and a timing of turning the steering wheel is guided by voice.

Subsequently, in S18, the CPU 31 determines whether the parking of the vehicle is completed. Specifically, it is determined that the parking of the vehicle is completed when the vehicle is located at the target parking position set in the parking space specified in S15 and the shift position of the vehicle is changed to "P".

If it is determined that the parking of the vehicle is completed (YES in S18), the parking assistance processing program is ended. On the other hand, if it is determined that the parking of the vehicle is not completed (NO in S18), the parking assistance is continuously performed.

As described in detail above, according to the driving assistance device 1 and the computer programs executed by the driving assistance device 1 in the present embodiment, the captured images obtained by capturing images of the surrounding environment by the side cameras 8A and 8B provided in the vehicle are cumulatively stored in association with the vehicle information when the captured images are captured (S5), the cumulatively stored captured images are synthesized based on the vehicle information to generate the route surrounding image 44 indicating the surrounding environment along the route on which the vehicle has traveled (S6), the route surrounding image 44 along a route on which the vehicle is currently traveling is displayed (S13), the side cameras 8A and 8B are provided to capture an image of a region including a side region located laterally with respect to the vehicle, and only a part of the captured images including the side region are extracted and stored. Therefore, even when an overhead image or a bird's-eye view image seen from any virtual viewpoint is displayed, a three-dimensional object can be displayed without being distorted or stretched relative to an original shape thereof.

Further, since the image in an elongated rectangular region perpendicular to the axle extending in the front-rear direction of the vehicle among the captured images captured by the side cameras 8A and 8B are extracted and stored, even when there is a three-dimensional object in the extracted image, it is possible to display the three-dimensional object without being distorted or stretched relative to an original shape thereof.

Since the captured images having the curved surfaces that become further away from the ground surface as distances from the vehicle increase as the projection surfaces 42A and 42B are stored, it is possible to display images showing not only the road surface but also the environment in the side direction as viewed from the host vehicle.

Since a route surrounding image along a route on which the vehicle is currently traveling in a direction opposite to the traveling direction with respect to the current position of the vehicle is generated, and the route surrounding image along the route on which the vehicle is currently traveling in the direction opposite to the traveling direction with respect to the current position of the vehicle is displayed, even when the vehicle travels on a new route on which the vehicle has not traveled in the past, the route surrounding image along the route on which the vehicle is currently traveling can be displayed although it is limited to the direction opposite to the traveling direction with respect to the current position of the vehicle. In addition, it is possible to display the route surrounding image that reflects the surrounding situations (for example, positions of other vehicles) in real time.

It is to be understood that this disclosure is not limited to the above-described embodiment, and various improvements and modifications can be made without departing from the scope of this disclosure.

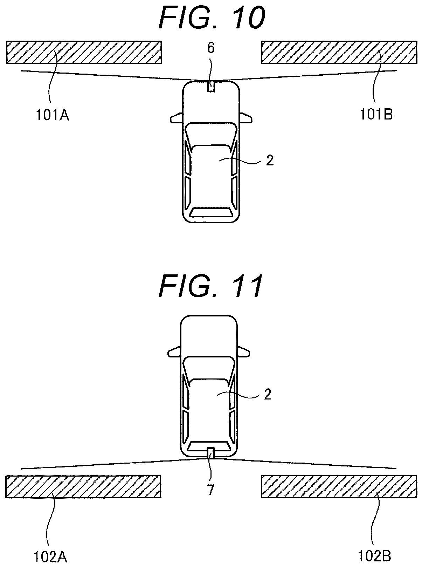

For example, in the present embodiment, the images in an elongated rectangular region perpendicular to the axle extending in the front-rear direction of the vehicle among the captured images captured by the side cameras 8A and 8B are extracted and stored, and the images are synthesized to generate the route surrounding image 44. However, the region in which the image is extracted may be not necessarily perpendicular to the axle as long as the region is a part of regions including the side region located laterally with respect to the vehicle. If the region in which the image is extracted is a part of regions including the side region located laterally with respect to the vehicle, the images may not be necessarily captured images captured by the side cameras 8A and 8B, but may be a part of images captured by the front camera 6 or the rear camera 7. For example, when extraction is performed on the captured images captured by the front camera 6, extraction ranges 101A and 101B shown in Fig. 10 are used. In contrast, when extraction is performed on the captured images captured by the rear camera 7, extraction ranges 102A and 102B shown in Fig. 11 are used. Since the front camera 6 and the rear camera 7 use a wide-angle lens having a wide angle of view, the side region can be included in the imaging range.

In the present embodiment, it is assumed that the route surrounding image 44 shown in Fig. 9 is displayed on the liquid crystal display 4 while the parking assistance by the autonomous driving assistance is performed. The route surrounding image 44 may also be displayed while autonomous driving assistance other than parking assistance is performed. Further, the route surrounding image 44 shown in Fig. 9 may be displayed on the liquid crystal display 4 while the vehicle is traveling by manual driving.

In the present embodiment, the route surrounding image 44 shown in Fig. 9 is displayed on an in-vehicle display, and may be displayed on a display of a terminal outside the vehicle. This allows a user outside the vehicle to easily grasp the current progress of parking until completion, for example, when performing parking assistance by remote control using a remote control.

In the present embodiment, the processing of the route surrounding image generation processing program (Fig. 3) and the parking assistance processing program (Fig. 8) are executed by the driving assistance ECU 10 of the driving assistance device 1, and an execution entity can be changed as appropriate. For example, a control unit of the liquid crystal display 4, a vehicle control ECU, a control unit of a navigation device, and other in-vehicle devices may execute the processing.

## Claims

1. A driving assistance device (1) comprising:
an image storage unit (31) configured to cumulatively store captured images, each obtained by capturing an image of a surrounding environment by an imaging device (6, 7, 8A, 8B) provided in a vehicle (2), in association with vehicle information when capturing the respective captured images;
an image synthesizing unit (31) configured to synthesize the cumulatively stored captured images based on the vehicle information to generate a route surrounding image (44) indicating a surrounding environment along a route on which the vehicle travels; and
an image display unit (4) configured to display the route surrounding image along a route on which the vehicle is currently traveling, wherein
the imaging device is provided to capture an image of a region including a side region located laterally with respect to the vehicle, and
the image storage unit extracts and stores only a part, which includes the side region, in the captured image captured by the imaging device.

2. The driving assistance device according to claim 1, wherein
the image storage unit extracts and stores an image in an elongated rectangular region perpendicular to an axle extending in a front-rear direction of the vehicle in the captured image captured by the imaging device.

3. The driving assistance device according to claim 1, wherein
the image storage unit stores the captured image having, as a projection surface (42A, 42B), a curved surface that becomes further away from a ground surface as a distance from the vehicle increases.

4. The driving assistance device according to any one of claims 1 to 3, wherein
the image synthesizing unit generates the route surrounding image along the route on which the vehicle is currently traveling in a direction opposite to a traveling direction with respect to a current position of the vehicle, and
the image display unit displays the route surrounding image along the route on which the vehicle is currently traveling in the direction opposite to the traveling direction with respect to the current position of the vehicle.
